# EUROPÄISCHE PATENTSCHRIFT

(11) **EP 2 517 551 B1**
(45) Veröffentlichungstag und Bekanntmachung des Hinweises auf die Patenterteilung: **23.09.2020**
(21) Anmeldenummer: 12158383.5
(22) Anmeldetag: 07.03.2012
(51) Int. Cl.: A01G 25/06, A01G 27/00, A01G 29/00

(54) **Bewässerungssystem**
Watering system
Système d'irrigation

(30) Priorität: 28.04.2011 DE 102011002303
(43) Veröffentlichungstag der Anmeldung: 31.10.2012
(73) Patentinhaber: MeierGuss Limburg GmbH, 65556 Limburg (DE)
(72) Erfinder:
(74) Vertreter: Patentanwälte Olbricht Buchhold Keulertz

(56) Entgegenhaltungen:
- EP-A1- 0 194 963
- EP-A1- 1 913 810
- DE-A1- 3 701 057
- DE-U1-202006 010 713
- GB-A- 2 315 396
- US-B1- 6 453 607

## Beschreibung

Die vorliegende Erfindung betrifft ein Bewässerungssystem für eine zumindest teilweise überbaute Pflanze, insbesondere einen Baum. Ein solches Bewässerungssystem ist in der EP1 913 810 A1 beschrieben.

Es ist bekannt Pflanzen, insbesondere Bäume in den Bereichen von Verkehrsflächen vor Umwelteinflüssen zu schützen. Um dies zu gewährleisten, werden die Pflanzen, insbesondere die Bäume zumindest teilweise überbaut. Das Überbauen erfolgt dabei zum Beispiel durch das Vorsehen von Baumrosten, welche im Bereich um den Stamm einer Pflanze herum angeordnet sind. Durch das Vorsehen solcher Roste, beziehungsweise durch anderweitiges Überbauen des Wurzelbereichs der Pflanze, insbesondere des Baumes, wird dieser Wurzelbereich vor Beeinträchtigungen aus der Umwelt geschützt. Darüber hinaus wird es auf diese Weise möglich, dass der Bereich unterhalb der Pflanze, zum Beispiel unterhalb der Krone eines Baumes als Verkehrsfläche nutzbar wird. Es ist also möglich diesen Bereich mit Fahrzeugen zu befahren oder Personen zur Nutzung zur Verfügung zu stellen.

Nachteilig bei bekannten Überbauungen von Pflanzen, insbesondere von Bäumen ist es, dass auf diese Weise eine zusätzliche Versiegelung des Bodens eintritt. Aufgrund dieser Versiegelung kann Niederschlagswasser nur noch in eingeschränkter Weise oder sogar überhaupt nicht mehr in den Wurzelbereich der Pflanze vordringen, sodass auf diese Weise die natürliche Art der Bewässerung der Pflanze im Wesentlichen vollständig unterbleibt. Es ist daher notwendig, dass die Pflanzen, die in bekannter Weise zumindest teilweise überbaut sind, in regelmäßigen Abständen bewässert werden. Für die Bewässerung ist es bekannt, dass zum Beispiel mittels Tankwagen Bewässerungswasser zu den einzelnen Pflanzen geliefert wird und dort dem Wurzelbereich direkt oder indirekt zugeführt wird. Eine direkte Zufuhr ist zum Beispiel mit Hilfe von Wurzelsonden bekannt, welche Öffnungen in der Überbauung darstellen und eine direkte Zufuhr von Bewässerungswasser zu den Wurzeln erlauben.

Nachteilhaft bei den bekannten Bewässerungssystemen ist es weiter, dass zum einen ein hoher Aufwand notwendig ist, um das Bewässerungswasser zu den Pflanzen zu transportieren. Darüber hinaus ist auch die Bewässerung selbst ein aufwendiger Vorgang, da das Bewässerungswasser in gewünschter Weise direkt oder indirekt den Wurzelstock der Pflanze erreichen muss. Ein weiterer Nachteil bekannter Bewässerungssysteme ist, dass durch die zusätzliche Versiegelung des Bodens oberhalb des Wurzelbereiches Sickerfläche für Niederschlagswasser verloren geht. Durch die zunehmende Versiegelung von Verkehrsflächen wird auf diese Weise nicht nur zusätzlich abzuführendes Niederschlagswasser erzeugt, sondern darüber hinaus eine vorher vorhandene Sickerfläche versiegelt. Dementsprechend sind die zugehörigen Kanalisationen einer solchen Verkehrsfläche an die dadurch vergrößerten Abfuhrmengen des Niederschlagswassers auszulegen.

Es ist Aufgabe der vorliegenden Erfindung ein Bewässerungssystem für zumindest eine teilweise überbaute Pflanze zur Verfügung zu stellen, welches die voranstehend beschriebenen Nachteile behebt. Insbesondere ist es Aufgabe der vorliegenden Erfindung ein Bewässerungssystem zur Verfügung zu stellen, mit deren Hilfe eine besonders kostengünstige Bewässerung und vorteilhafterweise gleichzeitig eine Versickerung von Niederschlagswasser möglich wird.

Voranstehende Aufgabe wird gelöst durch ein Bewässerungssystem mit den Merkmalen des unabhängigen Anspruchs 1. Vorteilhafte Ausführungsformen ergeben sich unter anderem aus den an den unabhängigen Anspruch anschließenden Unteransprüchen.

Ein erfindungsgemäßes Bewässerungssystem für eine zumindest teilweise überbaute Pflanze, insbesondere einen Baum, weist wenigstens einen Rinnenkörper mit einer Rinne auf, in der Niederschlagswasser in der Umgebung der Pflanze aufgenommen und weitergeleitet wird. Ein derartiger Rinnenkörper kann zum Beispiel aus einem Metallguss- oder einem Betonwerkstoff gebildet sein und ist insbesondere mit einem Gefälle ausgestattet, um das aufgenommene Niederschlagswasser entlang des Gefälles zu einer bestimmten Position der Rinne zu transportieren. Solche Rinnenkörper sind vorteilhafterweise in eine Verkehrsfläche eingelassen und zum Beispiel ebenfalls mit einem eigenen Rost abgedeckt, um ein Überfahren desselben zu ermöglichen.

Weiter ist bei einem erfindungsgemäßen Bewässerungssystem eine Reinigungsvorrichtung zur Reinigung des Niederschlagswassers vorgesehen, die mit der Rinne des Rinnenkörpers fluidkommunizierend verbunden ist, sodass das Niederschlagswasser der Reinigungsvorrichtung zugeführt wird. Dabei handelt es sich bei der fluidkommunizierenden Verbindung zum Beispiel um eine direkte Anbindung oder eine Verrohrung, welche mit Hilfe eines Gefälles den Transport des Niederschlagswassers in die Reinigungsvorrichtung hinein ermöglicht.

Unter der "Reinigungsvorrichtung" ist dabei eine Vorrichtung zur Reinigung des Niederschlagswassers mit Bezug auf deren Wirkung in dem Wurzelbereich der Pflanze denkbar. So kann eine Reinigung zum Beispiel hinsichtlich Feststoffen erfolgen, sodass zum Beispiel Staub, Sand oder andere Feststoffe wie kleine Steine aus dem Niederschlagswasser entfernt werden können. Auch weitere Reinigungsmethoden, zum Beispiel das Entfernen von Salzrückständen von Streusalz kann vorteilhaft sein, um Schädigungen der Wurzel der Pflanze zu verhindern. Dabei kann die Reinigung sowohl rein mechanisch/physikalisch, zum Beispiel durch ein schwerkraftgefördertes Absetzen von Feststoffen erfolgen. Jedoch ist es auch möglich, dass komplexere Reinigungsvorrichtungen zum Beispiel physikalische oder sogar chemische Reinigungsvorrichtungen zum Einsatz kommen.

Bei einem erfindungsgemäßen Bewässerungssystem ist darüber hinaus ein Behälter zur Speicherung des gereinigten Niederschlagswassers vorgesehen, der mit der Reinigungsvorrichtung fluidkommunizierend verbunden ist, sodass diesem Niederschlagswasser zugeführt wird. Der Behälter weist also ein Behältervolumen auf, in welchem gereinigtes Niederschlagswasser gespeichert werden kann. Auf diese Weise ist es möglich das aufgefangene und gereinigte Niederschlagswasser in dem Behälter aufzunehmen ohne es direkt der Versickerung, bzw. der Bewässerung zuzuführen. Die Aufnahmekapazität des Behälters hängt dabei insbesondere von der Größe der jeweiligen Pflanze ab. Auch ein Parameter für die Größe der Aufnahmekapazität kann die Größe des Wasserbedarfs der zugehörigen Pflanze und/oder die zu erwartenden Niederschlagsmengen am Einsatzort des Bewässerungssystems sein.

Weiter ist bei einem erfindungsgemäßen Bewässerungssystem zumindest ein Bewässerungsauslass zur Bewässerung der Pflanze vorgesehen, der mit dem Behälter fluidkommunizierend verbunden ist, sodass das gespeicherte Niederschlagswasser aus diesem zur Bewässerung der Pflanze austreten kann. Dabei ist zwischen dem Behälter und dem zumindest einen Bewässerungsauslass wenigstens ein Fließbegrenzer in der fluidkommunizierenden Verbindung angeordnet, sodass auf diese Weise der Fluss des gespeicherten Niederschlagswassers auf einen Maximalwert begrenzt ist. Ein solcher Fließbegrenzer ist nach Anspruch 1 als Ventil ausgebildet und ist hinsichtlich seines Maximalwertes einstellbar, sodass der Fluss variabel begrenzt werden kann. Damit wird ersichtlich, dass der Maximalwert im Rahmen der vorliegenden Erfindung sowohl fest eingestellt vordefiniert, jedoch auch an dem Bewässerungssystem selbst, zum Beispiel über den Öffnungsgrad des Ventils, einstellbar sein kann.

Durch das Vorsehen von zumindest einem Bewässerungsauslass bei einem erfindungsgemäßen Bewässerungssystem kann das gespeicherte und zuvor gereinigte Niederschlagswasser direkt der Bewässerung der Pflanze zugeführt werden. Dies hat zum einen den Vorteil, dass bereits vorhandenes Niederschlagswasser trotz der Versiegelung der Verkehrsfläche an Ort und Stelle versickern kann und auf diese Weise der zugehörige Kanal entsprechend kleiner ausgelegt werden kann. Ein weiterer Vorteil ist es, dass durch die Verwendung des Niederschlagswassers vor Ort eine zusätzliche Bewässerung der Pflanze in verringertem Maße stattfinden oder sogar vollständig auf diese verzichtet werden kann. So wird auf diese Weise zum einen hinsichtlich des Umweltschutzes versiegelte Fläche als Sickerfläche wiedergewonnen, zum anderen der Aufwand der Bewässerung eine Pflanze deutlich reduziert.

Durch das Vorsehen des Fließbegrenzers wird die Bewässerung auch über einen Zeitraum hinweg möglich, welcher länger andauert, als der Niederschlag selbst. Auf diese Weise kann sozusagen eine Phasenverschiebung hinsichtlich des Zeitpunkts der Bewässerung erfolgen. Unabhängig davon wie häufig ein Regenguss oder wie stark der Regenguss vonstattengeht, wird das gereinigte Niederschlagswasser im Behälter gespeichert und kontinuierlich zur Bewässerung an die Pflanze abgegeben. Auf diese Weise können auch relativ große und zeitlich weit voneinander entfernt liegende Regenschauer verwendet werden, um eine im Wesentlichen kontinuierliche Bewässerung der Pflanze gewährleisten zu können. Auch längere Trockenperioden können durch die Kombination aus Speicherung im Behälter und Fließbegrenzung bei der Bewässerung überbrückt werden.

In einfachster Ausführungsform handelt es sich bei dem Bewässerungsauslass um eine oder mehrere Öffnungen im Behälter. Jedoch können auch komplexere Formen des Bewässerungsauslasses für die Bewässerung der Pflanze vorgesehen sein. Bei dem Rinnenkörper kann es sich um einen mehrteiligen oder auch um einen einteiligen Rinnenkörper handeln. Mehrteilige Rinnenkörper haben den Vorteil, dass auf diese Weise auch komplexe Geometrien, insbesondere Ringe um die Pflanze herum, ausgeführt werden können. Auch die fluidkommunizierende Verbindung zwischen Rinnenkörper und Reinigungsvorrichtung kann mehrfach ausgebildet sein, sodass über eine Vielzahl von Verbindungen, insbesondere Rohren oder Schläuchen, das Niederschlagswasser der Reinigungsvorrichtung zugeführt werden kann.

Im Rahmen der vorliegenden Erfindung ist es von Vorteil, wenn zumindest ein Bewässerungselement vorhanden ist, das im Bereich der Wurzeln der Pflanze anordenbar ist, und das den zumindest einen Bewässerungsauslass aufweist. Das Bewässerungselement ist also eine Komponente der vorliegenden Erfindung, die von dem Behälter separat ist und auf es diese Weise ermöglicht, dass der Behälter an einem von der Wurzel der Pflanze separaten Ort anordenbar ist. Dies erhöht die Einsatzflexibilität eines erfindungsgemäßen Bewässerungssystems.

Das Bewässerungselement selbst kann dabei an die jeweilige Wurzelform der Pflanze angepasst sein. Handelt es sich also bei der Pflanze zum Beispiel um einen Flachwurzlers so kann es sich bei dem Bewässerungselement um ein im Wesentlichen flächiges Element handeln, welches eine Verteilfunktion für das gereinigte Niederschlagswasser aus dem Behälter mit sich bringt. Bei Tiefwurzlern kann dementsprechend ein in die Tiefe ragendes Bewässerungselement vorgesehen sein, um eine vertikale Verteilung des gereinigten Niederschlagswassers aus dem Behälter vornehmen zu können. In besonders einfacher Weise kann es sich bei dem Bewässerungselement auch um ein flexibles Element, zum Beispiel einen flexiblen Schlauch handeln, der beim Einsetzen der Pflanze, insbesondere des Baumes, auf die Wurzeln, also auf den Wurzelstock der Pflanze oder um diesen herum gelegt wird.

Ebenfalls vorteilhaft ist es, wenn bei einem erfindungsgemäßen Bewässerungssystem das Bewässerungselement ringförmig ausgebildet ist, um den Bereich der Wurzel der Pflanze zu umfassen. Auf diese Weise kann unabhängig von der tatsächlichen Anordnung des Behälters eine im Wesentlichen gleichmäßig um den Wurzelstock der Pflanze herum fortschreitende Bewässerung erzielt werden. Auch vorteilhaft kann es sein, wenn bei einem erfindungsgemäßen Bewässerungssystem das Bewässerungselement spiralförmig ausgebildet ist, um den Bereich der Wurzel der Pflanze unter Veränderung der Höhe oder des Abstandes zu den Wurzeln zu umlaufen. Auf diese Weise können insbesondere Tiefwurzler besonders gut bewässert werden, da unabhängig von der tatsächlichen Tiefe der Wurzel eine kontinuierliche und konstante Bewässerung derselben erfolgen kann. Auch die Variation der Höhe und des Abstandes zur Wurzel kann für eine besonders gezielte Bewässerung desselben zum Einsatz kommen.

Ein weiterer Vorteil ist es, wenn im Rahmen der vorliegenden Erfindung der Rinnenkörper einen geschlossenen Umfang bildet, um die Pflanze im Wesentlichen vollständig zu umgeben. Auf diese Weise wird nicht nur eine besonders große Fläche geschaffen, aus welcher über ein Gefälle Niederschlagswasser in dem Rinnenkörper aufgenommen werden kann, sondern darüber hinaus durch das im Wesentlichen vollständige Umgeben des Baumes eine Sicherung für denselben erzeugt. Diese Sicherung funktioniert dahingehend, dass vermieden wird, dass Niederschlagswasser in ungereinigter Form, also direkt in der Nähe des Stammes der Pflanze versickern und diesen in unerwünschter Weise direkt bewässern kann. Vielmehr fängt die Rinne, welche in Form des Rinnenkörpers die Pflanze umgibt, im Wesentlichen vollständig das umgebende Niederschlagswasser auf und führt dieses zur Bewässerung nur in erfindungsgemäßer Weise über die Reinigungsvorrichtung und anschließend über den Behälter zur Bewässerung zu. Auf diese Weise kann das Wachstum und die Gesundheit der Pflanze positiv beeinflusst werden.

Ein weiterer Vorteil ist es, wenn bei einem erfindungsgemäßen Bewässerungssystem der Rinnenkörper zumindest abschnittsweise netzförmig ausgebildet ist und die Rinne ebenfalls netzförmig in dem Rinnenkörper verläuft. Auf diese Weise kann ein Auffangnetz für Niederschlagswasser aufgespannt werden, um in besonders effizienter Weise eine besonders große Menge von Niederschlagswasser aufzunehmen. Dies ermöglicht einerseits auch Behälter mit großen Aufnahmekapazitäten zu füllen, und andererseits eine relativ große Fläche, mit versiegeltem Boden der Versickerung für Niederschlagswasser zur Verfügung zu stellen. Ein zugehöriger Kanal kann dementsprechend kleiner ausfallen oder sogar gänzlich entfallen.

Im Rahmen der vorliegenden Erfindung ist der Fließbegrenzer hinsichtlich seines Maximalwertes einstellbar. Dies erfolgt in mechanischer Weise durch die Ausbildung des Fließbegrenzers als Ventil. Wird nun der Öffnungsquerschnitt des Ventils variiert, so kann auf diese Weise die Durchflussrate für gereinigtes Niederschlagswasser aus dem Behälter zur Bewässerung des Wurzelstockes der Pflanze eingestellt werden. Je weiter das Ventil geschlossen ist, umso länger kann eine kontinuierliche Bewässerung erfolgen und umso weniger Wasser wird pro Zeiteinheit der Bewässerung des Wurzelstocks zur Verfügung gestellt. Der Öffnungsquerschnitt und damit der Maximalwert für den Fließbegrenzer orientiert sich demnach zum einen an der Aufnahmekapazität des Behälters, zum anderen an der Niederschlagshäufigkeit des Nutzungsortes und zuletzt an dem Wasserbedarf der entsprechenden Pflanze.

Ebenfalls vorteilhaft ist es, wenn bei einem erfindungsgemäßen Bewässerungssystem der Behälter einen Überlauf aufweist, der insbesondere mit einem Anschluss an die Kanalisation ausgestattet ist. Dies hat den Vorteil, dass gänzlich jegliches Niederschlagswasser, welches von dem Rinnenkörper aufgefangen wird, die Reinigungsvorrichtung durchläuft, und trotzdem auch bei Starkregensituationen eine Beschädigung des Bewässerungssystems verhindert wird. Dabei ist darauf hinzuweisen, dass den Überlauf des Behälters ausschließlich gereinigtes Niederschlagswasser verlässt, sodass unabhängig von der weiteren Verarbeitung, also unabhängig von Versickern oder Abführung im Kanal, nur gereinigtes Niederschlagswasser zu berücksichtigen ist.

Ebenfalls vorteilhaft ist es, wenn bei einem erfindungsgemäßen Bewässerungssystem der Behälter und/oder die Reinigungsvorrichtung einen Absetzboden aufweist, auf welchem sich Schwebstoffe während der Speicherung im Behälter absetzen können. Ein derartiger Absetzboden in der Reinigungsvorrichtung kann für die Schnellreinigung hinsichtlich relativ schwerer Feststoffe, wie zum Beispiel Steinen, eingesetzt werden. Während der länger andauernden Lagerung des gereinigten Niederschlagswassers im Behälter kann eine fortschreitende Reinigung dahingehend erzielt werden, dass auch feinere Schwebstoffe im gereinigten Niederschlagswasser sich absetzen können. Auf diese Weise wird über die Lagerung im Behälter sozusagen eine zweite Reinigungsstufe durchgeführt, und durch die herausnehmbare Ausbildung des Absetzbodens ein Reinigen des Behälters in besonders einfacher Weise ermöglicht. Nach gewissen Zeitabständen wird dementsprechend der Absetzboden aus dem Bewässerungssystem, nämlich dem Behälter, herausgenommen und entleert.

Im Rahmen der vorliegenden Erfindung kann es ebenfalls vorteilhaft sein, wenn der Rinnenkörper zumindest teilweise als Fundament für einen Baumrost ausgebildet ist. Auf diese Weise kann durch verstärkte mechanische Ausbildung des Rinnenkörpers die Komplexität des gesamten Bewässerungssystems verringert werden, beziehungsweise als Zusatznutzen die Fundamentierung des Baumrostes zur Verfügung gestellt werden.

Die vorliegende Erfindung wird näher erläutert anhand der beigefügten Zeichnungsfiguren. Die dabei verwendeten Begrifflichkeiten "links", "rechts", und "unten" beziehen sich auf eine Ausrichtung der Zeichnungsfiguren mit normal lesbaren Bezugszeichen. Es zeigen:
- Figur 1: eine erste Ausführungsform eines erfindungsgemäßen Bewässerungssystems,
- Figur 2: eine zweite Ausführungsform eines erfindungsgemäßen Bewässerungssystems,
- Figur 3: eine dritte Ausführungsform eines erfindungsgemäßen Bewässerungssystems.

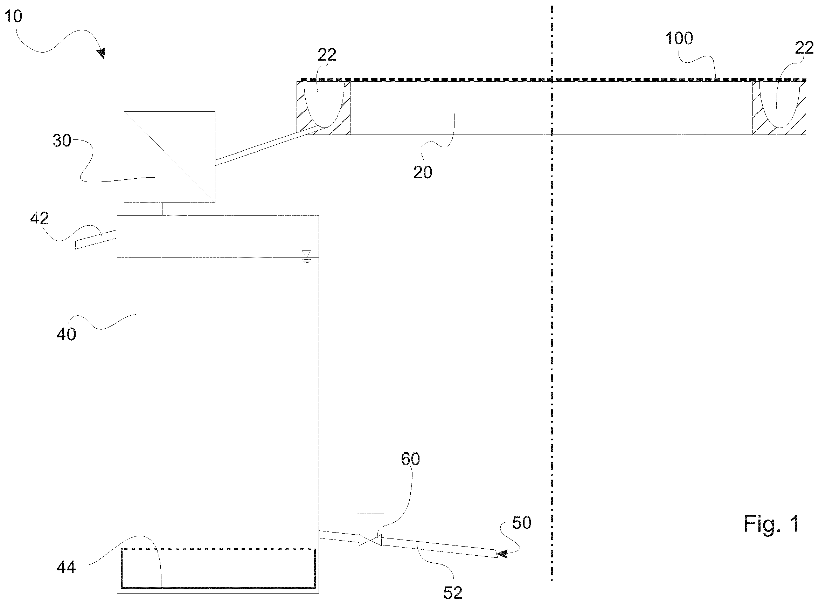

In den Figuren 1 bis 3 sind drei Ausführungsformen eines erfindungsgemäßen Bewässerungssystems 10 dargestellt. Die drei Ausführungsformen sind sich sehr ähnlich, weshalb gleiche Elemente mit gleichen Bezugszeichen versehen sind und dementsprechend deren Funktionalität nur einmal näher erläutert wird.

In Figur 1 ist eine erste Ausführungsform des Bewässerungssystems 10 dargestellt. Als zentrale Mittelachse ist eine Mittelachse zu erkennen, welche auch gleichzeitig die Achse ist, in welcher vertikal eine Pflanze (nicht dargestellt), insbesondere ein Baum eingepflanzt ist. Das bedeutet also, dass sich oberhalb eines Baumrostes 100 die Pflanze selbst, insbesondere deren Oberflächenteil, zum Beispiel die Baumkrone befindet, während unterhalb des Baumrostes Erdreich vorliegt, in welchem sich die Wurzeln, insbesondere der Wurzelstock der Pflanze befindet. Zum Beispiel erstreckt sich bei einem Tiefwurzler der Wurzelstock der Pflanze relativ tief entlang der Achse gemäß Figur 1 nach unten.

Die Achse und damit auch die Pflanze umgibt im Wesentlichen vollständig ein Rinnenkörper 20, welcher gleichzeitig als Fundament für den Baumrost 100 dient. Der Rinnenkörper 20 ist dabei bei vorliegender Ausführungsform mehrteilig ausgebildet, um ein im Wesentlichen vollständiges Umgreifen der Pflanze zu ermöglichen. Der Rinnenkörper 20 ist dabei mit zumindest einer Rinne 22 versehen, die ein Gefälle aufweist, um das in der Rinne 22 aufgefangene Niederschlagswasser in gewünschter Weise zu transportieren. Das aufgefangene Niederschlagswasser wird dabei zu einem Ablauf in der Rinne 22 gefördert, über welchen es über ein folgendes Gefälle in fluidkommunizierender Weise einer Reinigungsvorrichtung 30 zugeführt wird.

Die Reinigungsvorrichtung 30 ist in den Figuren 1 bis 3 nur schematisch dargestellt und ist insbesondere eine Reinigung aus mechanischer Sicht. Das bedeutet, dass eine Reinigung hinsichtlich von Feststoffen, insbesondere aufgrund deren Eigengewicht, erfolgen kann. So kann die Reinigungsvorrichtung 30 als aufsteigende Spirale ausgeführt sein, in welcher schwerere Elemente, wie zum Beispiel Steine, zurückbleiben und in einer Auffangschale aufgefangen werden. Auch komplexere Reinigungsvorrichtungen, wie zum Beispiel physikalische oder chemische Reinigungen, die zum Beispiel durch Osmose, Filter oder chemische Zusatzstoffe funktionieren, sind im Rahmen der vorliegenden Erfindung denkbar.

Der Reinigungsvorrichtung in Strömungsrichtung gesehen nachfolgend befindet sich ein Behälter 40 ebenfalls in fluidkommunizierender Verbindung mit dem der Reinigungsvorrichtung 30. Über ein Gefälle fließt das gereinigte Niederschlagswasser aus der Reinigungsvorrichtung 30 in den Behälter 40, welcher eine vordefinierte Aufnahmekapazität aufweist. Bei jedem Niederschlag wird also die Reinigungsvorrichtung 30 durch Niederschlagswasser durchspült und der Behälter 40 dementsprechend auf, beziehungsweise nachgefüllt. Die Darstellung der Figur 1 zeigt einen im Wesentlichen vollständig gefüllten Behälter 40. Findet in einem solchen Zustand ein weiteres Regenereignis statt, so wird das Niederschlagswasser weiter von der Rinne 22 aufgenommen, von der Reinigungsvorrichtung 30 gereinigt und ebenfalls weiter dem Behälter 40 zugeführt. Um nun eine Beschädigung des Behälters 40 zu vermeiden, weist dieser einen Überlauf 42 auf, der entweder in das umgebende Erdreich führt oder aber einen Anschluss an einen Kanal besitzt. Dies verhindert ein unkontrolliertes Überlaufen oder sogar ein Bersten des Behälters 40. Auf diese Weise ist ein kontrolliertes Ablassen überflüssiger Mengen an Niederschlagswasser ermöglicht. Dabei ist darauf hinzuweisen, dass es sich bei dem Überlauf 42 um das Abgeben von bereits gereinigtem Niederschlagswasser handelt.

Am Boden des Behälters 40 ist ein Absetzboden 44 vorgesehen, welcher insbesondere mit einem Rost ausgebildet ist. Durch diesen Rost hindurch können sich feinere Schwebstoffe, also Schwebstoffe, welche in der Reinigungsvorrichtung 30 bei deren Durchlaufen nicht herausgefiltert werden konnten, absetzen. Da sich das gereinigte Niederschlagswasser zum Teil relativ lange in dem Behälter 40 befinden kann, kann auf diese Weise sozusagen eine zweite Reinigungsstufe zur Verfügung gestellt werden.

Aus dem Behälter 40 wird nun das gespeicherte und gereinigte Niederschlagswasser zur Bewässerung der Pflanze verwendet. Hierfür ist bei der Ausführungsform der Figur 1 ein Bewässerungselement 52 vorgesehen, welches in einfachster Weise eine Rohrverbindung oder ein Schlauch, insbesondere ein flexibler Schlauch ist. Das Bewässerungselement 52 weist dabei einen Bewässerungsauslass 50 oder auch mehrere Bewässerungsauslässe 50 auf, aus welchen das gereinigte und gespeicherte Niederschlagswasser zur Bewässerung der Wurzel der Pflanze abgegeben, beziehungsweise ausgegeben werden kann.

Um sicher zu stellen, dass der Behälter 40 nicht in einem Zug vollständig leerläuft, ist darüber hinaus ein Fließbegrenzer 60 vorgesehen, welcher in der fluidkommunizierenden Verbindung zwischen dem Behälter 40 und dem Bewässerungsauslass 50 angeordnet ist. Dieser Fließbegrenzer 60 ist als Ventil dargestellt, welches eine fest eingestellte oder aber eine auch eine variierbare Querschnittsverengung aufweist. Auf diese Weise kann die maximale Durchflussrate durch den Fließbegrenzer 60 eingestellt sein oder eingestellt werden und damit Weise die Zeitdauer vordefiniert sein, über welche das Volumen des Behälters 40 leerläuft. Vorteilhafterweise ist die Zeitdauer des Leerlaufes mit Bezug auf die gesamte Aufnahmekapazität des Behälters 40 größer als der durchschnittliche zeitliche Abstand zwischen zwei Regenereignissen am Ort der Nutzung eines erfindungsgemäßen Bewässerungssystems 10.

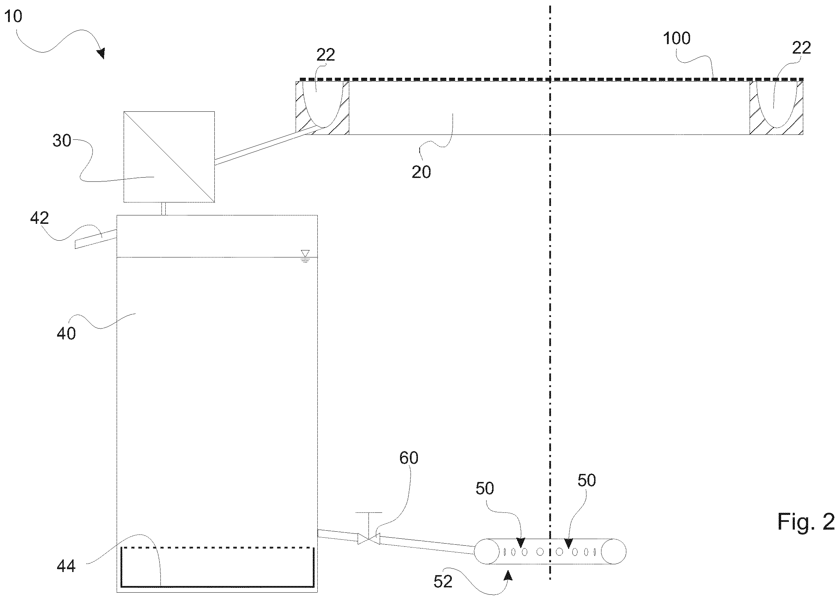

In Figur 2 ist eine alternative Ausführungsform eines erfindungsgemäßen Bewässerungssystems 10 dargestellt. Diese ist sehr ähnlich der Ausführungsform der Figur 1, jedoch ist hier ein komplexeres Bewässerungselement 52 vorgesehen.

Das Bewässerungselement 52 dieser Ausführungsform ist im Wesentlichen ringförmig ausgebildet, sodass dieser Bewässerungsring um einen Wurzelstock einer Pflanze herumgelegt sein kann. Auch ein Anordnen um einen Wurzelballen herum, beziehungsweise oberhalb eines solchen Wurzelballens ist im Rahmen der vorliegenden Erfindung denkbar. Darüber hinaus sind eine Vielzahl von Bewässerungsauslässen 50 vorgesehen, sodass ein im Wesentlichen konstantes und kontinuierliches Bewässern rund um den Wurzelstock einer Pflanze mit dieser Ausführungsform möglich ist.

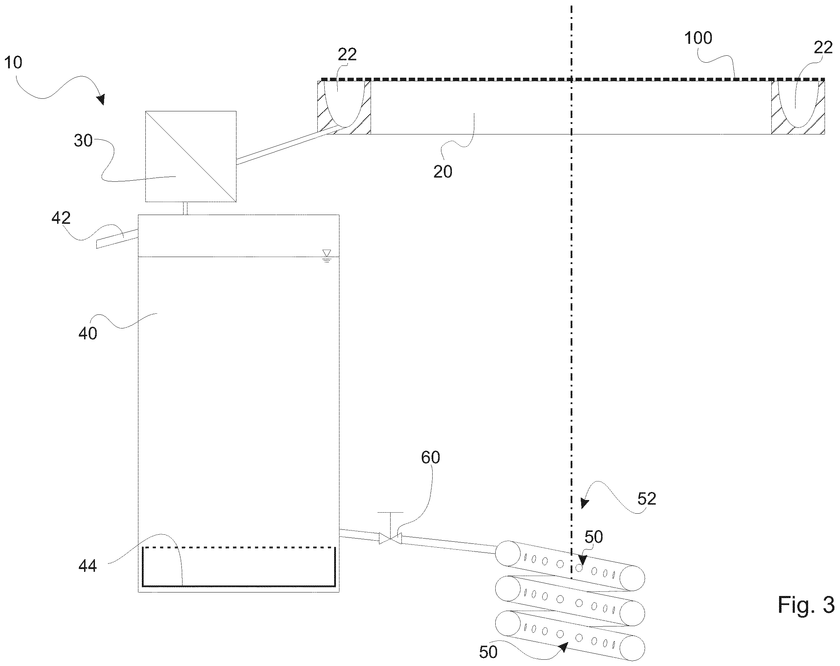

Figur 3 zeigt eine Ausführungsform, wie sie zum Beispiel bei Tiefwurzlern zum Einsatz kommen kann. Auch hier herrscht große Ähnlichkeit zu den Ausführungsformen der Figuren 1 und 2. Jedoch ist bei dieser Ausführungsform das Bewässerungselement 52 noch komplexer ausgestaltet. So handelt es sich hier um eine spiralförmige Ausbildung, insbesondere eine helixförmige Ausbildung, mit einem nach unten geneigten Gefälle. Das Bewässerungselement 52 wird also von dem Behälter 40 mit gereinigtem und gespeichertem Niederschlagswasser gespeist und durch das Gefälle des Bewässerungselementes 52 von dem Niederschlagswasser durchlaufen. Dabei passiert das Niederschlagswasser eine Vielzahl von Bewässerungsauslässen 50 und kann nicht nur um den Wurzelstock einer Pflanze herum, sondern auch entlang dessen vertikaler Erstreckung eine kontinuierliche Bewässerung durchführen. Auf diese Weise gelingt in besonders einfacher Art eine konstante und exakt definierte Bewässerung des Wurzelstocks.

Anhand der voranstehend erläuterten Ausführungsbeispiele gemäß der Figuren 1 bis 3 wird sichtbar, dass das Prinzip der vorliegenden Erfindung an die jeweils gewünschte Einsatzsituation, insbesondere an die jeweiligen Bedürfnisse der zu bewässernden Pflanze besonders einfach angepasst werden kann.

Es ist selbstverständlich, dass die voranstehend beschriebenen Ausführungsformen nur Beispiele sind, die insbesondere hinsichtlich ihrer Einzelkomponenten von einem Fachmann ohne Weiteres, sofern technisch sinnvoll, frei miteinander kombiniert werden können.

### Bezugszeichenliste

- 10: Bewässerungssystem
- 22: Rinnenkörper
- 22: Rinne
- 30: Reinigungsvorrichtung
- 40: Behälter
- 42: Überlauf
- 44: Absetzboden
- 50: Bewässerungsauslass
- 52: Bewässerungselement
- 60: Fließbegrenzer
- 100: Baumrost

## Patentansprüche

1. Bewässerungssystem (10) für eine zumindest teilweise überbaute Pflanze, insbesondere einen Baum, aufweisend:
- wenigstens einen Rinnenkörper (20), der eine Rinne (22) aufweist in der Niederschlagswasser im Bereich der Pflanze aufgenommen und weitergeleitet wird,
- eine Reinigungsvorrichtung (30) zur Reinigung des Niederschlagswassers, die mit der Rinne (22) des Rinnenkörpers (20) fluidkommunizierend verbunden ist, so dass das der Reinigungsvorrichtung (30) Niederschlagswasser zugeführt wird,
- einen Behälter (40) zur Speicherung des gereinigten Niederschlagswassers, der mit der Reinigungsvorrichtung (30) fluidkommunizierend verbunden ist, so dass diesem Niederschlagswasser zugeführt wird, und
- zumindest einen Bewässerungsauslass (50) zur Bewässerung der Pflanze, der mit dem Behälter (40) fluidkommunizierend verbunden ist, so dass das gespeicherte Niederschlagswasser aus diesem zur Bewässerung der Pflanze austreten kann,
- wobei zwischen dem Behälter (40) und dem zumindest einen Bewässerungsauslass (50) wenigstens ein Fließbegrenzer (60) in der fluidkommunizierenden Verbindung angeordnet ist, der den Fluss des gespeicherten Niederschlagswassers auf einen Maximalwert begrenzt,
wobei
- der Fließbegrenzer (60) hinsichtlich seines Maximalwertes einstellbar ist, und
- der Fließbegrenzer (60) hinsichtlich seines Maximalwertes in mechanischer Weise dadurch einstellbar ist, dass der Fließbegrenzer (60) als Ventil ausgebildet ist.

2. Bewässerungssystem (10) nach Anspruch 1, **dadurch gekennzeichnet, dass** zumindest ein Bewässerungselement (52) vorhanden ist,
- das im Bereich der Wurzeln der Pflanze anordenbar ist, und
- das den zumindest einen Bewässerungsauslass (50) aufweist.

3. Bewässerungssystem (10) nach Anspruch 2, **dadurch gekennzeichnet, dass** das Bewässerungselement (52) ringförmig ausgebildet ist, um den Bereich der Wurzeln der Pflanze zu umfassen.

4. Bewässerungssystem (10) nach Anspruch 2, **dadurch gekennzeichnet, dass** das Bewässerungselement (52) spiralförmig ausgebildet ist, um den Bereich der Wurzeln der Pflanze unter Veränderung der Höhe und/oder des Abstands zu den Wurzeln zu umlaufen.

5. Bewässerungssystem (10) nach einem der vorangegangenen Ansprüche, **dadurch gekennzeichnet, dass** der Rinnenkörper (20) einen geschlossenen Umfang ausbildet, um die Pflanze im Wesentlichen vollständig zu umgeben.

6. Bewässerungssystem (10) nach einem der vorangegangenen Ansprüche, **dadurch gekennzeichnet, dass**
- der Rinnenkörper (20) zumindest abschnittsweise netzförmig ausgebildet ist und
- die Rinne (22) ebenfalls netzförmig in dem Rinnenkörper (20) verläuft.

7. Bewässerungssystem (10) nach einem der vorangegangenen Ansprüche, **dadurch gekennzeichnet, dass** der Behälter (40) einen Überlauf (42) aufweist, der insbesondere mit einem Anschluss an die Kanalisation ausgestattet ist.

8. Bewässerungssystem (10) nach einem der vorangegangenen Ansprüche, **dadurch gekennzeichnet, dass** der Behälter (40) einen Absetzboden (44) aufweist, auf welchem sich Schwebstoffe während der Speicherung im Behälter (40) absetzen können.

9. Bewässerungssystem (10) nach einem der vorangegangenen Ansprüche, **dadurch gekennzeichnet, dass** der Rinnenkörper (20) zumindest teilweise als Fundament für einen Baumrost (100) ausgebildet ist.

## Claims

1. Irrigation system (10) for an at least partially overbuilt plant, in particular a tree, having:
- at least one gutter body (20) which has a gutter (22) in which precipitation water is received and passed on in the region of the plant,
- a cleaning device (30) for cleaning the precipitation water, which cleaning device is connected to the gutter (22) of the gutter body (20) in a fluid-communicating manner such that the precipitation water is fed to the cleaning device (30),
- a container (40) for storing the cleaned precipitation water, which container is connected to the cleaning device (30) in a fluid-communicating manner such that precipitation water is fed to said container, and
- at least one irrigation outlet (50) for watering the plant, which irrigation outlet is connected in a fluid-communicating manner to the container (40) such that the stored precipitation water can escape therefrom for watering the plant,
- wherein at least one flow limiter (60) is arranged in the fluidly communicating connection between the container (40) and the at least one irrigation outlet (50), which flow limiter limits the flow of the stored precipitation water to a maximum value,
wherein
- the flow limiter (60) is adjustable with respect to its maximum value and
- the flow limiter (60) is mechanically adjustable with respect to its maximum value due to the fact that the flow limiter (60) is designed as a valve.

2. Irrigation system (10) according to claim 1, **characterised in that** at least one irrigation element (52) is present
- which can be arranged in the region of the roots of the plant and
- which has the at least one irrigation outlet (50).

3. Irrigation system (10) according to claim 2, **characterised in that** the irrigation element (52) has an annular shape in order to enclose the region of the roots of the plant.

4. Irrigation system (10) according to claim 2, **characterised in that** the irrigation element (52) is spiral-shaped in order to circulate the region of the roots of the plant by changing the height and/or the distance from the roots.

5. Irrigation system (10) according to any of the preceding claims, **characterised in that** the gutter body (20) forms a closed periphery in order to surround the plant substantially completely.

6. Irrigation system (10) according to any of the preceding claims, **characterised in that**
- the gutter body (20) is net-shaped at least in sections and
- the gutter (22) also runs in a net-shaped manner in the gutter body (20).

7. Irrigation system (10) according to any of the preceding claims, **characterised in that** the container (40) has an overflow (42) which is in particular provided with a connection to the sewage system.

8. Irrigation system (10) according to any of the preceding claims, **characterised in that** the container (40) has a settling bottom (44) on which suspended matter can settle during storage in the container (40).

9. Irrigation system (10) according to any of the preceding claims, **characterised in that** the gutter body (20) is at least partially designed as a foundation for a tree grating (100).

## Revendications

1. Système d'irrigation (10) pour une plante au moins partiellement recouverte, en particulier un arbre, présentant :
- au moins un corps de caniveau (20), qui présente un caniveau (22), est accueilli et redirigé dans les eaux de pluie dans la portée de la plante,
- un dispositif de nettoyage (30) pour le nettoyage de l'eau de pluie, qui est relié en communication fluidique avec le caniveau (22) du corps de caniveau (20), de sorte que de l'eau de pluie soit amenée au dispositif de nettoyage (30),
- un conteneur (40) pour le stockage de l'eau de pluie purifiée, qui est relié en communication fluidique avec le dispositif de nettoyage (30), de sorte que de l'eau de pluie lui soit amenée, et
- au moins une sortie d'irrigation (50) pour l'irrigation de la plante, qui est reliée en communication fluidique avec le conteneur (40), de sorte que l'eau de pluie stockée puisse s'échapper de celui-ci pour l'irrigation de la plante,
- dans lequel, entre le conteneur (40) et l'au moins une sortie d'irrigation (50), au moins un limiteur d'écoulement (60) est agencé dans la liaison en communication fluidique, qui limite le flux de l'eau de pluie stockée à une valeur maximale,
dans lequel
- le limiteur d'écoulement (60) peut être réglé en fonction de sa valeur maximale, et
- le limiteur d'écoulement (60) peut être réglé de manière mécanique en fonction de sa valeur maximale par le fait que le limiteur d'écoulement (60) est réalisé comme une soupape.

2. Système d'irrigation (10) selon la revendication 1, **caractérisé en ce qu'**au moins un élément d'irrigation (52) est présent,
- qui peut être agencé dans la portée des racines de la plante, et
- qui présente au moins une sortie d'irrigation (50).

3. Système d'irrigation (10) selon la revendication 2, **caractérisé en ce que** l'élément d'irrigation (52) est réalisé en forme d'anneau pour comprendre la portée des racines de la plante.

4. Système d'irrigation (10) selon la revendication 2, **caractérisé en ce que** l'élément d'irrigation (52) est réalisé en forme de spirale pour contourner la portée des racines de la plante en modifiant la hauteur et/ou la distance par rapport aux racines.

5. Système d'irrigation (10) selon l'une quelconque des revendications précédentes, **caractérisé en ce que** le corps de caniveau (20) réalise une circonférence fermée pour entourer sensiblement complètement la plante.

6. Système d'irrigation (10) selon l'une quelconque des revendications précédentes, **caractérisé en ce que**
- le corps de caniveau (20) est réalisé en forme de réseau au moins par section et
- le caniveau (22) passe également en forme de réseau dans le corps de caniveau (20).

7. Système d'irrigation (10) selon l'une quelconque des revendications, **caractérisé en ce que** le conteneur (40) présente un trop-plein (42), qui est en particulier équipé d'un raccordement au réseau d'égouts.

8. Système d'irrigation (10) selon l'une quelconque des revendications, **caractérisé en ce que** le conteneur (40) présente un fond de dépôt (44), sur lequel des matières en suspension peuvent se déposer dans le conteneur (40) pendant le stockage.

9. Système d'irrigation (10) selon l'une quelconque des revendications, **caractérisé en ce que** le corps de caniveau (20) est réalisé au moins partiellement comme base pour une grille d'arbres (100).
